# EUROPEAN PATENT APPLICATION

(11) **EP 4 459 428 A1**
(43) Date of publication of application: **06.11.2024**
(21) Application number: 23171168.0
(22) Date of filing: 02.05.2023
(51) Int. Cl.: G06F 3/01

(54) **METHOD AND APPARATUS FOR GENERATING A MULTICHANNEL HAPTIC SIGNAL FROM A MULTICHANNEL AUDIO SIGNAL**

(71) Applicant: Go Touch VR, 59000 Lille (FR)
(72) Inventor: VEZZOLI, Eric, 59000 LILLE (FR); QUEK, Nicholas, 138538 SINGAPORE (SG)
(74) Representative: RVDB

(57) **Abstract**

There is provided methods and apparatus of generating a multichannel haptic signal (233) from a multichannel audio signal (201). To reach that aim, audio information (212) and sound spatialization information (213) are determined from the multichannel audio signal (201) for each audio channel of the multichannel audio signal (201). Haptic information is determined for each haptic channel of the multichannel haptic signal (233) from the audio information (212) and the sound spatialization information (213) to generate the multichannel haptic signal (233).

## Description

### FIELD

The present application generally relates to the field of haptic and, in particular, to the generating of haptic data representative of a haptic effect to be rendered by a haptic device. The present application also relates to method and apparatus of processing data representative of a multichannel audio signal to generate data representative of a multichannel haptic signal representative of one or more haptic effects to be rendered by a haptic device.

### BACKGROUND

The present section is intended to introduce the reader to various aspects of art, which may be related to various aspects of at least one exemplary embodiments of the present application that is described and/or claimed below. This discussion is believed to be helpful in providing the reader with background information to facilitate a better understanding of the various aspects of the present application.

Haptic technology broadly refers to any technology recreating the sense of touch in a user interface by applying force, vibration, motion and other feelings such as temperature, to provide information to an end user, for example in addition to visual and audio information when rendering multimedia contents.

Haptic feedback covers a wide range of possible stimulation embodiments but is mainly divided into tactile haptic technology and kinesthetic haptic technology: tactile haptic feedback (or tactile haptic effect) refers to sensations such as vibration, friction, or micro-deformation while kinesthetic haptic feedback (or kinesthetic haptic effect) refers to sensations that provide force sensations that can stimulate both mechanical stimuli as well as stimuli related to the position and the movement of the body.

The rendering of haptic feedback or haptic effect is obtained using haptic device (also called haptic rendering device), a haptic device corresponding to an arrangement of one or more haptic actuators. For example, vibrotactile effects might be obtained with the use of haptic devices such as ERMs (Eccentric Rotating Mass), LRAs (Linear Resonant Actuators), and large bandwidth actuators like VCM (Voice Coil Motors), PZT (Piezoelectric Actuators) or SMA (Shape Memory Alloy). Kinesthetic effects might be rendered with actuators exercising a force impeding a limb movement, such effects being merely felt on the muscles and tendons than on the skin. Other examples of haptic devices comprise resistive force feedback devices, active force feedback devices and skin indentation devices.

While there is a large range of haptic devices enabling to experience haptic effects, contents, e.g., audio and/or video content, comprising haptic effects to be rendered are quite limited. The lack of haptic content limits the interest in haptic devices and limits user experience while consuming the contents.

### SUMMARY

The following section presents a simplified summary of at least one exemplary embodiment in order to provide a basic understanding of some aspects of the present application. This summary is not an extensive overview of an exemplary embodiment. It is not intended to identify key or critical elements of an embodiment. The following summary merely presents some aspects of at least one of the exemplary embodiments in a simplified form as a prelude to the more detailed description provided elsewhere in the document.

According to a first aspect of the present application, there is provided a method of generating a multichannel haptic signal comprising a plurality of haptic signals each associated with a haptic channel, each haptic channel being associated with a set of haptic actuators of a haptic device, the set of haptic actuators comprising at least a haptic actuator, the method comprising the steps of:
- receiving audio data representative of a multichannel audio signal;
- determining, from the multichannel audio signal, audio information for each audio channel of a plurality of audio channels comprised in the multichannel audio signal and sound spatialization information, the audio information being representative of characteristics of a part of the multichannel audio signal associated with each audio channel;
- determining, for each haptic channel, haptic information according to the audio information of at least one audio channel and according to the sound spatialization information, the haptic information being representative of characteristics of the haptic signal associated with each haptic channel; and
- generating the multichannel haptic signal according to the haptic information.

In an exemplary embodiment, the determining of the sound spatialization information comprises:
- determining time delay information representative of time delays between the audio signals associated with the audio channels;
- determining location information representative of a position of each virtual audio source of a set of virtual audio sources in a space associated with the haptic device according to the time delay information, the sound spatialization information comprising the location information, each haptic channel of the plurality of haptic channels being associated with a different virtual audio source of the set of virtual audio sources.

In an exemplary embodiment, the at least one audio channel is selected among the plurality of audio channels according to the location information of the virtual audio source associated with each haptic channel.

In an exemplary embodiment, the set of haptic actuators associated with each haptic channel is determined according to the location information of the virtual audio source associated with each haptic channel.

In an exemplary embodiment, the determining of the haptic information is further according to haptic device information representative of the haptic device, the haptic device information belonging to a set of information comprising:
- identification information identifying the haptic device;
- a number of haptic actuators comprised in the set of haptic actuators;
- a number of haptic channels of the plurality of haptic channels;
- location information representative of a location of the haptic actuators in the haptic device; and
- haptic rendering capabilities of the haptic device.

In an exemplary embodiment, the number of haptic channels is determined according to the number of haptic actuators.

In a further exemplary embodiment, the haptic information is further determined according to spatialization information associated with each audio channel and the location information.

In another exemplary embodiment, the location information corresponds to spatial distribution information representative of spatial distribution of the set of haptic actuators in a determined multidimensional space associated with at least a part of the haptic device.

In a further exemplary embodiment, a number of audio channels being equal to the number of haptic channels, the haptic information of each haptic channel of the plurality of haptic channels is determined according to the audio information of a different audio channel of the plurality of audio channels.

In an additional exemplary embodiment, the haptic information of one haptic channel of the plurality of haptic channels is determined according to the audio information of at least two audio channels of the plurality of audio channels.

In another exemplary embodiment, the audio information belongs to a set of information comprising:
- frequency information representative of frequency;
- amplitude information representative of amplitude;
- phase information representative of phase;
- envelope information representative of an envelope of said audio signal; and
- spectral power information representative of spectral power of said audio signal.

In an exemplary embodiment, the haptic information of the haptic channel of the plurality of haptic channels is determined according to the amplitude information of the audio information of the at least two audio channels.

In another exemplary embodiment, the method further comprises:
- obtaining classification information representative of a type of an audio content associated with the multichannel audio signal;
- selecting a set of detection parameters among a plurality of sets of detection parameters according to the classification information;
- detecting at least a component of the part of the multichannel audio signal associated with each audio channel according to the selected set of detection parameters,
the audio information being determined from the at least a component.

In a further exemplary embodiment, the at least a component belongs to a set of components comprising:
- a component corresponding to a transient in a temporal representation of the part of the multichannel audio signal; and
- a component corresponding to a frequency sub-band of a frequency band associated with a frequency representation of the part of the multichannel audio signal.

In an additional exemplary embodiment, the method further comprises obtaining a set of user-preference parameters representative of preference of a user, the haptic information being further determined according to the set of user-preference parameters.

According to a second aspect of the present application, there is provided an apparatus of generating a multichannel haptic signal, wherein the apparatus comprises a memory associated with at least a processor configured to implement the method in accordance with the first aspect of the present application.

According to a third aspect of the present application, there is provided a computer program product including instructions which, when the program is executed by one or more processors, causes the one or more processors to carry out a method according to the first aspect of the present application.

According to a fourth aspect of the present application, there is provided a non-transitory storage medium carrying instructions of program code for executing a method according to the first aspect of the present application.

The specific nature of at least one of the exemplary embodiments as well as other objects, advantages, features and uses of said at least one of exemplary embodiments will become evident from the following description of examples taken in conjunction with the accompanying drawings.

### BRIEF DESCRIPTION OF THE DRAWINGS

Reference will now be made, by way of example, to the accompanying drawings which show exemplary embodiments of the present application, and in which:
**Figure 1** shows a schematic representation of a communication network for communicating audio content, in accordance with at least one exemplary embodiment;
**Figure 2** shows an example of a generation scheme of a multichannel haptic signal from a multichannel audio signal representative of the audio content of figure 1, in accordance with at least one exemplary embodiment;
**Figure 3** shows an example of a processing scheme of at least a part of the multichannel audio signal of figure 2, in accordance with at least one exemplary embodiment;
**Figure 4** shows a first example of a haptic device configured to render haptic effect(s) from the multichannel haptic signal of figure 2, in accordance with at least one exemplary embodiment;
**Figure 5** shows a second example of a haptic device configured to render haptic effect(s) from the multichannel haptic signal of figure 2, in accordance with at least one exemplary embodiment;
**Figure 6** shows a schematic representation of the spatial arrangement of haptic actuators of a haptic device in a multidimensional space, in accordance with at least one exemplary embodiment;
**Figure 7** shows a schematic representation of the spatialization of an audio content obtained from the multichannel audio signal of figure 2, in accordance with at least one exemplary embodiment;
**Figure 8** shows a schematic block diagram of step(s) of a method of generating a multichannel haptic signal from the audio content of figure 1, in accordance with at least one exemplary embodiment;
**Figure 9** illustrates a schematic block diagram of an example of a system in which various aspects and exemplary embodiments are implemented.

Similar reference numerals may have been used in different figures to denote similar components.

### DESCRIPTION OF EXEMPLARY EMBODIMENTS

At least one of the exemplary embodiments is described more fully hereinafter with reference to the accompanying figures, in which examples of at least one of the exemplary embodiments are illustrated. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the disclosure is intended to cover all modifications, equivalents, and alternatives falling within the spirit and scope of the present application.

Exemplary embodiments described hereinafter may be combined with each other or each of the exemplary embodiment may be individually implemented, e.g., as an alternative embodiment.

At least one of the aspects generally relates to a method and apparatus of generating a multichannel haptic signal representative of one or more haptic effects from audio data representative of a multichannel audio signal representative of an audio content. The multichannel haptic signal comprises a plurality of haptic signals each associated with one haptic channel. The number of haptic channels may vary over time, depending for example from the audio content. The multichannel haptic signal may be transmitted to a haptic device having haptic rendering capabilities. According to a specific embodiment, the haptic device may further be configured to render the audio content from the multichannel audio signal representing the audio content.

The haptic device comprises for example one or more haptic actuators, e.g., LRA(s), VCM(s), ERM, PZT and/or SMA.

The multichannel haptic signal is obtained by processing the multichannel audio signal. To reach that aim, audio information (e.g., frequency information, amplitude information, phase information, envelope information and/or spectral power information) is determined or obtained by processing the multichannel audio signal, such audio information being determined or obtained for each audio channel of the multichannel audio signal. The audio information of a specific audio channel is representative of the characteristics of the audio signal corresponding to this specific audio channel.

Sound spatialization information is further determined or obtained from the multichannel audio signal, for example from metadata associated with each audio signal comprised in the multichannel audio signal and/or by processing the audio signals (e.g., by determining time delays between the audio signals) to identify and localize one or more virtual audio sources.

A virtual audio source corresponds to a location in the rendering space of the audio content of the origin of the audio content as perceived by a user listening the audio content in the rendering space. The position or location of the virtual audio source varies over time, depending on the audio content.

Haptic information (e.g., frequency information, amplitude information and/or phase information) is determined for each haptic channel comprised in the multichannel haptic signal according to audio information of one or more audio channels and according to the sound spatialization information.

According to a variant, the haptic information may further be determined according to haptic device information (e.g., the type of the haptic device and/or characteristics of the haptic device such as the number of haptic actuators forming the haptic device) representative of the haptic device that is intended to render the one or more haptic effects described with the multichannel haptic signal.

The haptic information of a specific haptic channel is representative of the haptic signal corresponding to this specific haptic channel.

The multichannel haptic signal is generated according to the haptic information determined for each haptic channel.

The processing of audio data of a plurality of audio channels enables to determine features of the audio data that are used for generating haptic data of a plurality of haptic channels. It enables to obtain one or more haptic effects to be rendered with the audio content, the one or more haptic effects being correlated and consistent with the audio content.

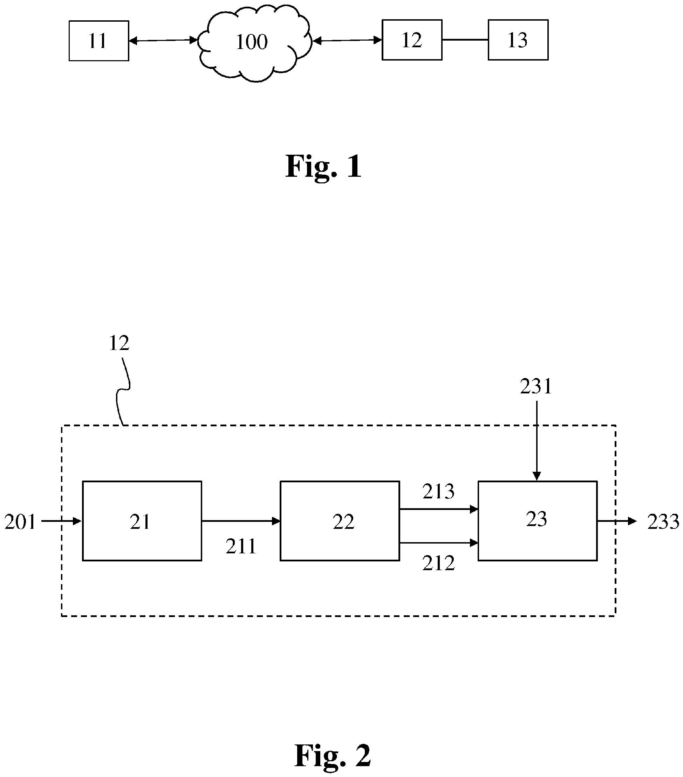

**Figure 1** illustrates a schematic representation of a communication network 100 for communicating audio content in accordance with at least one exemplary embodiment.

The network 100 corresponds for example to a WAN (Wide Area Network), LAN (Local Area Network) or WLAN (Wireless Local Area Network) network or a combination of one or more of these networks. According to other examples, the network 100 corresponds to a radio broadcasting network, a television broadcasting network, a cellular network (e.g., based on LTE or LTE-Advanced technologies) or a satellite network, or any combination thereof. The network 100 enables the transmission of a multichannel audio content from a first device 11 (e.g., a transmitter and/or encoder) to a second device 12 (e.g., a receiver and/or decoder).

The multichannel audio content corresponds for example to:
- a stereophonic audio content or stereophonic sound, i.e., with 2 audio channels; or
- a surround audio content or surround sound, i.e., with more than 2 audio channels, e.g., a so-called 5.1 surround audio content with 6 audio channels, a so-called 7.1 surround audio content with 8 audio channels or a 11.1 surround audio content (also called Auro 11.1) with 12 audio channels.

The multichannel audio content that is transmitted from the first device 11 to the second device 12 may be of any form. For example, the multichannel audio content may be transmitted as an analog audio signal or as a digital audio signal. In the following, the expression "multichannel audio signal" will be used to represent the signal transporting the data representative of the multichannel audio content.

Once received by the second device, the multichannel audio signal may be converted from analog to digital or inversely to digital or analog, as it will be recognized by the skilled person in the art.

The multichannel audio signal may be represented in time space and/or in frequency space. The multichannel audio signal may be converted from a time space representation to a frequency space representation, e.g., using FFT (Fast-Fourier Transform) or inversely from a frequency space representation to a time space representation, e.g., using an inverse FFT, as it will be recognized by the skilled person in the art.

The multichannel audio signal is for example represented with series of samples, for example a series of samples for each audio channel of the multichannel audio signal. A sample in a time space representation is represented with a value of amplitude associated with a time. A sample in a time space representation is represented with data representative of amplitude associated with a frequency (or a frequency range). The multichannel audio signal represented with series of samples results for example from a sampling process at a determined sampling rate or frequency (e.g., 44100 Hz), or at various sampling rate varying according to the frequency or frequency range of each audio signal associated with an audio channel of the plurality of audio channels forming the multichannel audio signal.

According to a specific embodiment, the multichannel audio signal may be associated with a video signal corresponding to a video content. For example, the multichannel audio signal may correspond to the audio content of a movie, of a video game, of VR (Virtual Reality) content.

The second device 12 is configured to process the received multichannel audio signal, notably for generating data representative of one or more haptic effects from the multichannel audio signal (or a part of the received multichannel audio signal). Processing performed by the second device 12 may for example comprise analog/digital converting, frequency filtering (e.g., low-pass filtering, band-pass filtering), temporal filtering (e.g., selecting a time window), downsampling, transforming form time space to frequency space, transforming from frequency space to time space, decoding, demultiplexing, retrieving the audio signal (also called part of the multichannel audio signal) associated with each audio signal from the multichannel audio signal, etc.

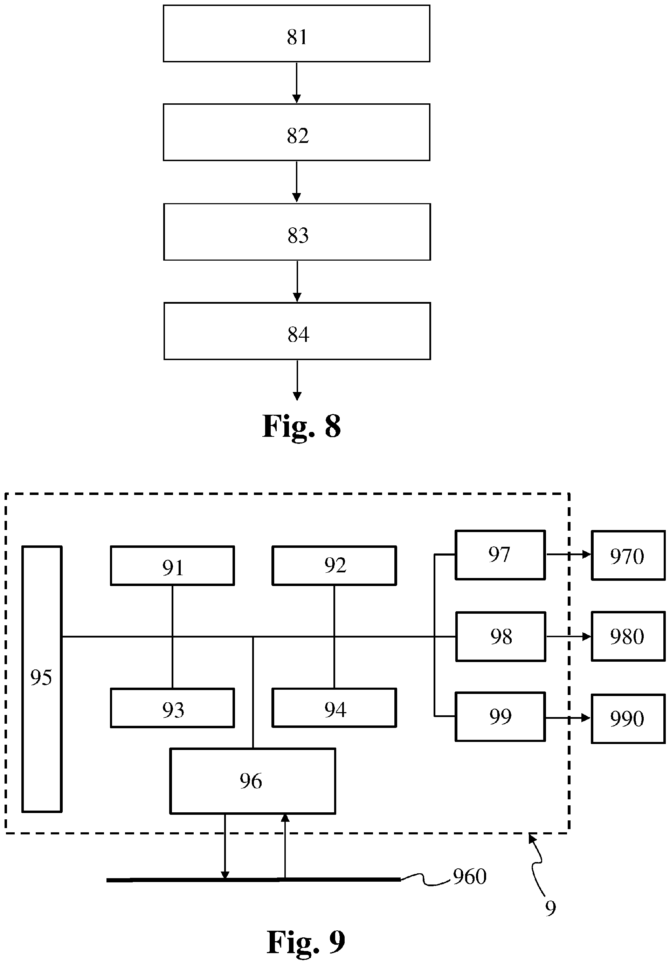

Exemplary embodiments of the first and/or second devices 11, 12 are described hereinafter with regard to figure 9.

The second device 12 is communicatively coupled to a third device 13 that corresponds to a haptic device. According to a specific and non-limiting example, the third device 13 is also configured to render the multichannel audio content or a part of the the multichannel audio content (e.g., a part of the audio channels of the multichannel audio content), the third device corresponding for example to a headset, XR headset or headphones. According to another specific and non-limiting example, the third device 13 is configured to render only haptic effect(s) (and no audio content), the third device 13 corresponding for example to a haptic vest, a haptic chair, a palm rest, a mouse, etc. The third device may for example be configured to receive a multichannel haptic signal comprising a plurality of haptic channels, each haptic channel transporting haptic data intended to a different haptic actuator or a different group of haptic actuators of the haptic device.

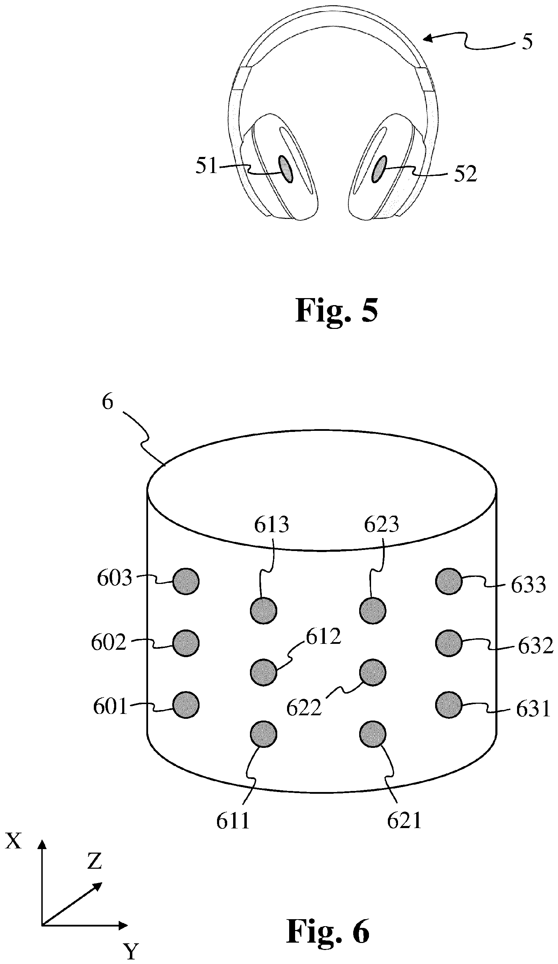

Exemplary embodiments of the third device 13 are described hereinafter with regard to figures 5 and 6.

**Figure 2** illustrates a schematic representation of a generation scheme of one or more haptic effects from a multichannel audio signal 201 in accordance with at least one exemplary embodiment.

The following embodiment(s) will be described with reference to a multichannel audio signal 201 received in input of the second device 12 corresponding to a digital multichannel audio signal represented in a time space. Naturally, the present principles do not limit to such an example but extends to any multichannel audio signal.

The multichannel audio signal 201 corresponds to the audio signal transmitted by the first device 11 or to only a part of it. The multichannel audio signal 201 comprises a plurality of audio channels, the number of audio channels being comprised between 2 and 24 or between 2 and 48 or more.

The multichannel audio signal 201 is encoded into a determined audio coding format, for example AAC, AC-4, ALS, MP3, WAV, FLAC, DTS, Vorbis, Opus, Windows Media Audio, etc.

Audio channels of the multichannel audio signal are for example each identified with a unique zero-based channel index as defined for example with ANSI/CEA-863-A and channel names comprising for example "Front Left", "Front Right", "Center", "Subwoofer", "Side Left", "Side Right", "Rear Left" and "Rear Right".

Blocks 21 to 23 represents indifferently operations/steps of a process/method and processing units implementing such operations/steps of the process/method. The processing units 21 to 23 may be implemented as a single element or as separate elements as a combination of hardware and software as known to those skilled in the art.

According to a specific and non-limiting example, the multichannel audio signal 201 or metadata associated with the multichannel audio signal comprises an information or a flag representative of the presence or absence of haptic data representative of a haptic effect to be rendered in said data. Such an information corresponds for example to a specific bit in a header, value '0' of the bit signaling that the audio data of the multichannel audio signal 201 do not comprise any haptic data and value '1' of the bit signaling that the audio data of the multichannel audio signal 201 comprises or encompasses haptic data describing the haptic effect(s) to be rendered. According to this example, operations 21 to 23 are only performed when the information is representative of absence of haptic data (e.g., bit with value '1').

In an operation 21, each audio channel of the plurality of audio channels comprised in the multichannel audio signal 201 is obtained from the multichannel audio signal 201 according to any method known by the skilled person in the art, e.g., by demultiplexing and/or splitting the multichannel audio signal 201.

According to an exemplary embodiment, one or more processing is applied to the data representative of each audio channel / signal obtained from the multichannel audio signal 201. The one or more processing comprises for example:
- down sampling, for example from a sampling rate of 44 100 Hz to a sampling rate of 2 400, 4 800 or 8 000 Hz; and/or
- converting the audio signal from time domain to frequency domain, for example by using Fourier Transform or Fast Fourier Transform; and/or
- low pass filtering for passing the part of the audio signal with a frequency lower than a determined cutoff frequency (or frequency cut); and/or
- band pass filtering for passing the part of the audio signal, which is within a determined range of frequencies; and/or
- buffering the data with a FIFO (First In, First Out) buffer.

In an operation 22, audio data 211 resulting from the processing performed in operation 21 is further processed. A plurality of sets of audio data 211 result from the operation 21, each set of audio data 211 being representative of and associated with a different audio channel of the plurality of audio channels comprised in the multichannel audio signal 201.

In operation 22, audio information 212 is determined for (or extracted or obtained from) each audio channel of the plurality of audio channels comprised in the multichannel audio signal 201 by processing the audio data 211 of said each audio channel.

The audio information 212 of an audio channel is advantageously representative of characteristics of the part of the multichannel audio signal (called audio signal hereinafter) associated with the audio channel.

The audio information 212 corresponds for example to frequency information, amplitude information and/or phase information of the audio signal associated with the audio channel.

According to a specific and non-limiting example, the audio information corresponds for example to the frequency and amplitude information associated with the samples representative of the audio content comprised in the audio channel. The audio information may further comprise any information representative of the audio signal associated with each audio channel, e.g., information representative of an envelope of the audio signal, information representative of spectral power in a frequency band, etc.

In operation 22, sound spatialization information 213 is determined or obtained from the audio data 211.

The sound spatialization information 213 comprises:
- location information representative of a position of one or more virtual audio sources in the rendering space associated with the haptic device 13, the location information being determined by processing the audio signals represented with the audio data 211 according to any method known to the skilled person in the art, for example by determining or computing time delays (also called time differences or lags) between the audio signals of the haptic channels, by extracting cues or features from the audio data, for example based on cross-correlation techniques, or as described in the paper "Calculated Time Delays of Multiple Active Sources in Live Sound", from Josh Reiss, in Conference Audio Engineering Society Convention 129, November 2010 or in the paper "Localization of Virtual Sources in Multichannel Audio Reproduction", by Ville Pulkki and Toni Hirvonen, in IEEE Transactions on Speech and Audio Processing, vol. 13, No. 1, January 2005; the location information comprises for example an angle value with regard to a reference direction associated with the rendering space or 3D coordinates of the virtual sound source in the rendering space; and/or
- information identifying a sound rendering device (e.g., a speaker) in a determined environment, this information being for example associated with each audio channel and obtained from metadata associated with the audio channels, this information corresponding to an identification number defined in a standard or to information identifying a location of the rendering devices, such as "Front Left", "Front Right", "Center", "Side Left", "Side Right", "Rear Left".

The audio information 212 and the sound spatialization information 213 are for example stored in a memory for further processing for generating or synthesizing the multichannel haptic signal.

A set of audio information / characteristics 212 representative of each of the audio channel obtained or determined at operation 22 is transmitted to the unit 23 with the sound spatialization information 213 for generating or synthesizing the multichannel haptic signal representative of the one or more haptic effect(s) to be rendered by the haptic device 13.

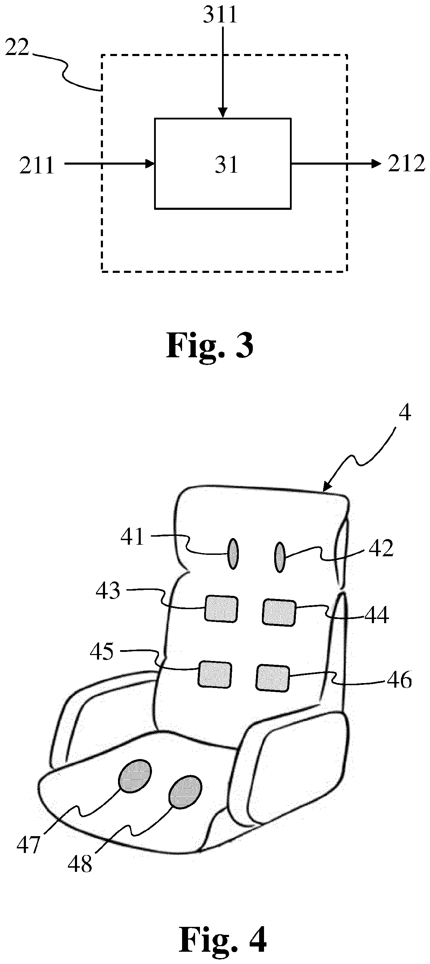

In an operation 23, for each haptic channel of a plurality of haptic channels comprised in the multichannel haptic signal to be generated, haptic information is determined according to the audio information of one or more audio channels determined in operation 22 and according to the sound spatialization information, as described hereinafter with regard to figures 4-7.

According to a variant, the haptic information is further determined according to haptic device information 231 representative of the haptic device 13.

The haptic information of a haptic channel is advantageously representative of characteristics of the part of the multichannel haptic signal (called haptic signal hereinafter) associated with the haptic channel.

The haptic information corresponds for example to frequency information, amplitude information and/or phase information of the haptic signal associated with the haptic channel.

The haptic device information 231 is for example received from the haptic device 13 that is communicatively coupled or connected with the second device 12, e.g., via wired connection (e.g., USB) or via wireless connection (e.g., Bluetooth^{®} or Wifi^{®}).

The haptic device information comprises data or information representative of the haptic device 13, such as for example:
- identification information or data identifying the haptic device 13, such identification information corresponding to a unique identifier encoded for example with 8 bits; and/or
- information or data representative of a number of haptic actuators comprised in (or forming) the haptic device 13; and/or
- information or data representative of a number of haptic channels of the plurality of haptic channels required by the haptic device 13 to render the one or more haptic effects described with the haptic channels of the multichannel haptic signal; and/or
- location information or data representative of the location of the haptic actuators comprised in the haptic device, the location information being for example defined in a reference space associated with the haptic device 13 and/or with position information like "Right", "Left", "Front", "Rear", "Up", "Down"; and/or
- information or data representative of haptic rendering capabilities of the haptic device 13, e.g., information or data representative of the type(s) of the haptic actuator(s) e.g., LRA, VCM, ERM, PZT, SMA) of the haptic device 13 and/or of the type of the haptic device 13 (headset, haptic chair, palmrest, etc.).

The haptic device information 231 is for example received automatically from the haptic device 13, when connecting the haptic device 13 to the second device 12, e.g., via USB.

When connecting the haptic device 13 to the second device 12, the haptic device 13 may automatically initiate a process for transmitting the haptic device information 231 through dedicated API(s) (Application Program Interface(s)). This process corresponds for example to a so-called "plug and play" (PnP) process, the haptic device 13 and the second device 12 corresponding to PnP devices.

According to another example, haptic device information 231 is obtained or retrieved from a memory of the second device 12 or from a remote system, for example upon reception of an identifier identifying the haptic device 13, said identifier being for example automatically transmitted by the haptic device 13 to the second device 12 or transmitted by the haptic device 13 after transmission of a request by the second device 12.

According to this example, the second device 12 receives for example the identification information identifying the haptic device 13 from the haptic device 13, and the second device retrieves complementary information about the haptic device 13 from a memory of the second device 12 or from a remote system, knowing the identifier of the haptic device 13. For example, the complementary information may comprise:
- information or data representative of a number of haptic actuators comprised in (or forming) the haptic device 13; and/or
- information or data representative of a number of haptic channels of the plurality of haptic channels required by the haptic device 13 to render the one or more haptic effects described with the haptic channels of the multichannel haptic signal; and/or
- location information or data representative of the location of the haptic actuators comprised in the haptic device, the location information being for example defined in a reference space associated with the haptic device 13 and/or with position information like "Right", "Left", "Front", "Rear", "Up", "Down"; and/or
- information or data representative of haptic rendering capabilities of the haptic device 13, e.g., information or data representative of the type(s) of the haptic actuator(s) e.g., LRA, VCM, ERM, PZT, SMA) of the haptic device 13 and/or of the type of the haptic device 13 (headset, haptic chair, palmrest, etc.).

The complementary information is for example registered in one or more LUT (Look-Up Table) and retrieved from the LUT knowing the identifier of the haptic device 13. If such information is not stored in a memory of the second device, the second device 12 may request the information to a remote device, e.g., a remote device in the "cloud".

According to an exemplary embodiment, the haptic device information 231 comprises information or data representative of a spatial distribution of the haptic actuator(s) of the haptic device 13. This spatial distribution information may for example be provided in place of information or data representative of a number of haptic actuators comprised in the haptic device 13 and the location information. A more detailed description of the spatial distribution information is to be find hereinafter with regard to figure 6.

According to another exemplary embodiment, the information regarding the number of haptic channels required by the haptic device 13 receiving the multichannel haptic signal is determined by the second device 12 from the haptic device information when the haptic device information 231 (or the complementary information) does not comprise explicitly this information about the number of haptic channels.

According to this exemplary embodiment, the number of haptic channels is for example determined from the information about the number of haptic actuators and/or the location information. For example, the number of haptic channels is determined as being equal to the number of haptic actuators.

According to another exemplary embodiment, the number of haptic channels is determined as being equal to the number of groups of haptic actuators, for example, but not exclusively, when the number of haptic actuators is greater than a determined threshold (for example greater than 10, 20, 30, 40), the haptic actuators being for example grouped according to their location to form a determined number of groups (for example equal to the number of audio channels), the haptic actuators belonging to a same group corresponding to neighbor haptic actuators.

According to another example, the haptic actuators are grouped to match the number of audio channels.

According to another exemplary embodiment, the number of haptic channels is determined by the second device 12 from the sound spatialization information. For example, a haptic channel is generated for each virtual audio source identified from the audio data.

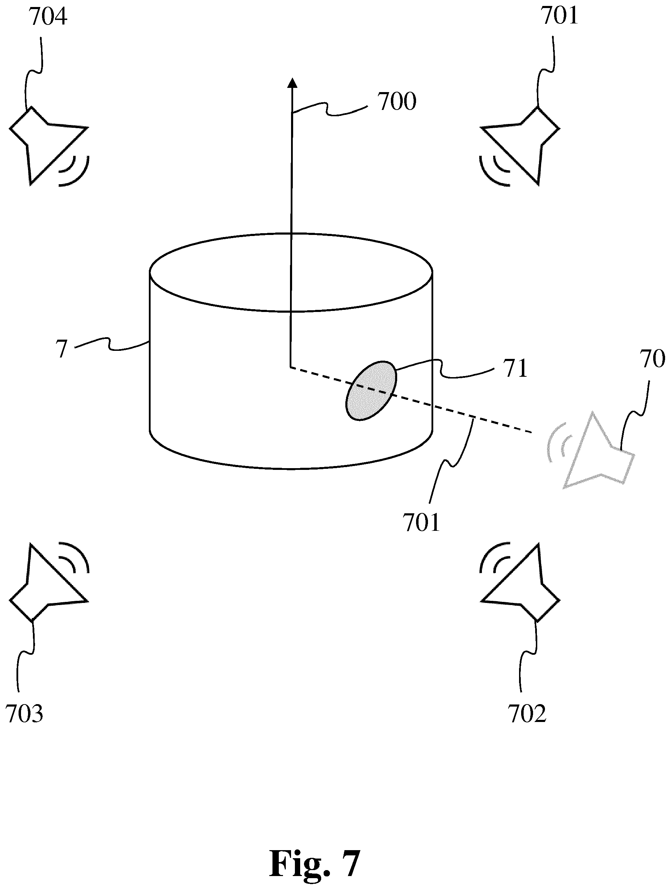

The one or more haptic actuators associated with each haptic channel may further be determined or identified from the sound spatialization information as well, for example as described hereinafter with more details with regard to figure 7. The haptic actuators may for example be dynamically assigned to the virtual audio sources, whose number and/or location may vary over time.

According to a variant, the number of haptic channels is determined from the spatial distribution information, as described hereinafter with regard to figure 6.

Haptic information of each haptic channel is for example determined from rendering rules or models, e.g., parametric rendering rules or models, which are for example stored in a memory of the second device 12, or which may be obtained from a remote device (for example upon request of the second device).

A set of rendering rules (or a model) is for example selected in a list of available sets of rendering rules (or models) based on one or more of the following information:
- the type of the haptic device; and/or
- the number of haptic channels; and/or
- the number of audio channels; and/or
- the rendering capabilities of the haptic device 13 (or of the haptic actuators comprised in the haptic device 13).

For example, the set of rules (or the model) is selected according to the number of audio channels and the number of haptic channels. Some parameters of the selected rules may for example be adapted according to the rendering capabilities of the haptic device 13 and/or the type of the haptic device. For example, when the information representative of the rendering capabilities specifies a frequency range and/or an amplitude range, the parameters of the rendering rules may be adapted in such a way that the haptic information (frequency and/or amplitude) that is determined from the audio information complies with the rendering capabilities.

For example, when the number of audio channels is equal to the number of haptic channels, the haptic information of each haptic channel is determined according to the audio information of a different audio channel of the plurality of audio channels. According to this example, there is a one-to-one matching between the audio channels and the haptic channels. The matching is for example determined according to spatialization information associated with each audio channel (for example determined from the index associated with each audio channel or from metadata associated with the audio channels, for example metadata identifying spatialization information such as "Front Left", "Front Right", "Center", "Subwoofer", "Side Left", "Side Right", "Rear Left" and "Rear Right") and location information associated with the haptic actuator(s) associated each haptic channel.

The rendering rules may be the same for all haptic channels or may vary from a haptic channel to another haptic channel. For example, for a multichannel audio signal corresponding to a stereo audio content with left and right audio signals, the audio information (or characteristics, e.g., amplitude, frequency, envelope, power spectrum) of the left signal may be identical or very close to the audio information of the right signal. According to this example, the determining of the haptic information for the "left" haptic channel and for the "right" haptic channel is based on the audio information of the "left" audio channel and of the "right" audio signal, respectively, by taking into account the time delay between the "left" audio signal and the "right" audio signal. More details regarding this specific example will be provided with regard to Figure 7.

According to another example, when the number of audio channels is equal to the number of haptic channels or when the number of audio channels is different from the number of haptic channels, the haptic information of one specific haptic channel is determined according to the audio information of two or more audio channels of the plurality of audio channels.

According to this example, the haptic information of a specific haptic channel comprises:
- frequency information that is the same as frequency information of one specific audio channel or that is according to the frequency information of one specific audio channel (e.g., the frequency may be adapted to the haptic actuator(s) associated with the haptic channel); and
- amplitude information that is determined from amplitude information of two or more audio channels (one of the 2 or more audio channels corresponding for example to the specific audio channel), from envelope information and/or from spectral power information of two or more audio channels.

Exemplary information of rules for determining haptic information from audio information are given hereinafter with regard to figures 4, 5 and 7.

According to a further exemplary embodiment, the haptic information is further determined according to a set of user-preference parameters.

User-preference parameters representative of user-preference, i.e., the preference of the user experiencing the haptic effect through the haptic device 13, are for example received from the haptic device 13 that is communicatively coupled or connected with the second device 12, e.g., via wired connection (e.g., USB) or via wireless connection (e.g., Bluetooth^{®} or Wifi^{®}). To reach that aim, the haptic device 13 comprises for example an HMI (Human-Machine Interface) configured to set one or more parameters. Such an HMI comprises for example one or more buttons and/or adjustment wheel(s).

According to another example, the user-preference parameters are set via an HMI associated with the second device 12, for example implemented by the second device 12. The HMI corresponds for example to a graphical HMI displayed on a display screen coupled with the second device 12 or comprised in the second device 12. The user-preference parameters are for example input using peripherals like a keyboard and/or a mouse or using a touch interface associated with the display screen.

The user may for example set the value of each parameter of at least a part of the parameters of the rendering rules (or rendering model) implemented in unit 23 to generate the multichannel haptic signal via the HMI.

According to another example, the user may select a rendering mode among a plurality of rendering modes, values assigned to the parameters of the rules / model varying from a rendering mode to another one for example, via an HMI associated with the haptic device 13 and/or with the second device 12.

Example of rendering modes are:
- Default mode, which corresponds to a balanced mode to enhance the listening of the audio content with the rendering of smooth haptic effects to increase the feeling of immersion for example;
- Entertainment mode, which is for example designed for beat driven music and/or action filled entertainment content: haptic effects may be used to enhance the role of basses and beats to increase the sense of presence of dynamic music and sounds effects;
- Gaming mode, which is for example designed for gaming sound effects.

When a rendering mode is selected, the second device 12 receives for example an information representative of the rendering mode that has been selected. The second device 12 uses this information to retrieve from a memory the values of the parameters associated with the rendering mode to synthesize the haptic effect(s).

According to another example, the second device 12 receives directly, for example from the haptic device 13, the values associated with the selected rendering mode.

Once each haptic information is determined for each haptic channel, a multichannel haptic signal 233 is generated according to the haptic information.

The generating of the multichannel haptic channel 233 comprises for example one or more of the following operations: multiplexing of the haptic signals of the haptic channels, digital/analog converting when analog signal is required by the haptic device 13, amplification, encoding the haptic data representative of the multichannel haptic signal in a format required by the haptic device 13 to render the one or more haptic effects described with the haptic data, etc.

In further operations, the obtained multichannel haptic signal is transmitted to the haptic device 13 from the second device and the one or more haptic effects are rendered by the haptic actuators of the haptic device 13.

Such a process enables to generate one or more haptic effects to be rendered with the audio content, the one or more haptic effects being correlated and consistent with the audio content.

**Figure 3** illustrates a scheme for obtaining the audio information 212 for each audio channel of the multichannel audio signal in accordance with at least one exemplary embodiment.

The following embodiment(s) will be described with reference to an audio signal 211 received in input of the unit 22 corresponding to a digital audio signal represented in a time space and associated with an audio channel. Naturally, the present principles do not limit to such an example but extends to any audio signal and to any audio channel of the multichannel audio signal 201.

The audio signal 211 corresponds to the audio signal of an audio channel received from unit 21.

The block 31 represents indifferently operations/steps of a process/method and processing units implementing such operations/steps of the process/method. The processing unit 31 may be implemented as a single element or as various elements as a combination of hardware and software as known to those skilled in the art.

According to a further specific and non-limiting example, classification information representative of a type of the multichannel audio content is associated with the multichannel audio signal.

The classification information is for example comprised in the data representative of the multichannel audio signal 201 or received as metadata with the data representative of the multichannel audio signal 201.

Classification information is associated with the multichannel audio signal on a time scale, i.e., classification information may vary over time as the type of the audio content may vary over time. A classification information may for example be associated with each time segment of the audio segment, the temporal duration of each time segment being fixed or varying to adjust to the audio content and types of audio/noise comprised in the multichannel audio content.

Classification information corresponds for example to an identification value coded on 4 or 8 bits for example. The type of the multichannel audio content identified with the classification information belongs for example to a determined list of different types comprising for example: voice, music, silence, explosion, dialogue, firearm noise, etc.

Sub-types may be identified within a type, for example for the type 'music', sub-types may comprise for example: classical, pop, rock, electro, jazz, metal, hard rock, etc.

According to a variant, the classification information is obtained with a semantic recognition method as known to those skilled in the art. Such a method may be applied to the audio content itself but also to video content associated with the audio content if applicable, video content providing additional information to identify the type of the audio content (for example the recognition of people talking to each other provides information to identify the type 'dialogue' or 'speech' or 'voice').

Classification information is for example obtained by implementing machine learning method, deep learning method, Artificial Intelligence, for example via neurol networks, as known to those skilled in the art. Examples of audio classification method are described in "Audio Classification Method Based on Machine Learning", by Feng Rong et al, published in IEEE, 21 September 2017, DOl: 10.1109/ICITBS.2019.98 or in "Comparative Analysis of Machine Learning Algorithms for Audio Signals Classification", by Poonam Mahana and Gurbhej Singh, in IJCSNS International Journal of Computer Science and Network Security, VOL. 15 No. 6, June 2015.

The processing of the multichannel audio content (and potentially of the video content associated with the audio content) is for example implemented by the first device 11, the classification information being added to the stream(s) of data transmitted to the second device 12.

According to a variant, when no classification information is received with the multichannel audio signal 201 by the second device 12, the determining of the classification information is performed by the second device 12 or by another device communicatively coupled to the second device 12.

In an operation 31, data 211 resulting from the processing performed in operation 21 is further processed.

A set of detection parameters 311 is determined according to the classification information. The set of detection parameters 311 is for example selected in a list or group of sets of parameters according to the classification information, i.e., according to the type of the audio content.

The sets of detection parameters are for example stored in a remote storage device communicatively coupled to the second device 12, a mapping between each set and corresponding type of audio content being associated with the list, the mapping information being for example registered in a LUT (Look-Up Table). The sets of detection parameters with the LUT, if applicable, are for example stored in a memory of the device performing the semantic recognition method or any other method to determine the classification information. According to this example, the set of detection parameters that is selected according to the classification information is received by the second device 12 with the multichannel audio content, for example in a channel separate from the channels transporting the audio data representative of the multichannel audio content.

According to another example, the sets of detection parameters are for example stored in a memory of the second device 12, with the mapping information registered in the LUT establishing relationship between each set and corresponding type of multichannel audio content being associated with the list.

Each set of detection parameters comprises for example one or several detection parameters, the type and/or value associated with each detection parameters depending on the type of audio content identified with the classification information. Identical detection parameter(s) may belong to several sets of detection parameters of the list.

The data 211 is advantageously processed to detect one or more specific components of the audio signal represented with the data 211 based on the detection parameters 311 selected according to the classification information.

The one or more components that is/are detected or determined within the audio signal using the detection parameters 311 correspond for example to:
- one or more transients, a transient being represented with a sudden change or variation in the audio signal, a transient corresponding for example to a part of the audio signal with an abrupt change in the amplitude (e.g., an amplitude peak or a series of amplitude peaks); and/or
- one or more frequency components/parts of the audio signal each corresponding to a frequency sub-band of the frequency band associated with the audio signal (e.g., a part of the audio signal with frequencies lower than a determined frequency cutoff or with frequencies belonging to a determined interval or band of frequencies).

Transient(s) may be detected in a time representation or frequency representation of the audio signal while frequency component(s) may be detected in the frequency representation (frequency domain) of the audio signal.

The one or more detection parameters used to detect the one or more components corresponds for example to one or more of the following parameters:
- a parameter representative of a determined amplitude; and/or
- a parameter representative of a time window, i.e., a temporal segment having a determined duration; and/or
- parameters representative of bounds of a frequency interval, i.e., the lower and upper bounds of the frequency interval; and/or
- a parameter representative of a frequency threshold, i.e., a determined frequency value, also called frequency cut or frequency cutoff; and/or
- a parameter representative of a spectral power threshold.

One or more characteristics representative of each of the detected component(s) and corresponding to the audio information 212 of the audio signal is or are determined and transmitted to unit 23 for synthesizing / generating the multichannel haptic signal as described with regard to figure 2.

The type of characteristic advantageously depends on the component it represents.

For example, when the detected component corresponds to a transient, the characteristic(s) 212 may correspond to one or more of the following characteristics or parameters:
- a parameter representative of an amplitude, for example a maximum amplitude value detected in a determined time window; and/or
- a parameter representative of the difference between 2 amplitude spectral densities.

When the detected component corresponds to a frequency component, the characteristic(s) 212 may correspond to one or more of the following characteristics or parameters:
- a parameter representative of a frequency, for example a maximum frequency value associated with a frequency representation of a signal (e.g., the envelope of at least a part of the audio signal) and/or a maximum frequency value in a range of frequencies; and/or
- parameters representative of the detected frequency component, e.g., parameters representative of samples of a frequency sub-part of the audio signal, the parameters corresponding for example to coefficient of a Fourier Transform or of a Fast Fourier Transform.

According to a first exemplary embodiment, an envelope of the audio signal 211 is obtained, e.g., extracted, from the data representative of the audio signal, for example from the representation of the audio signal in time domain.

The envelope is obtained through any method as known to those skilled in the art. Such method is for example described in the document "Improved estimation of the amplitude envelope of time-domain signals using true envelope cepstral smoothing", by Marcelo Caetano and Xavier Rodet, published in IEEE International Conference on Acoustics, Speech and Signal Processing, May 2011 (HAL Id: hal-00604385), or in the document "A heuristic approach to obtain signal envelope with a simple software implementation", by Cecilia Gisele Jarne, published in Anales AFA, July 2018.

### Detection of transient(s)

The detection of each transient is based on the rate of change of the envelope of the audio signal. For example, a function representative of the rate of change is obtained by deriving the function representative of the envelope.

A transient is for example detected each time the derivative of the envelope is greater than a determined threshold value, the determined threshold value corresponding to one detection parameter 311.

According to a variant, the detection of a transient is according to another detection parameter 311 corresponding to a time window. According to this variant, the audio signal 211 is segmented in time segments having each a duration corresponding to the time window parameter, at most one transient being sought in each time segment by comparing the derivative of the audio signal associated with said time segment with the determined threshold parameter 311.

Characteristics or audio information 212 representing a detected transient correspond to an amplitude value and a time, which correspond to the amplitude of the audio signal and corresponding time associated with the derivative at the point where the derivative is greater than the determined threshold value.

### Detection of frequency component(s) / sub-part(s)

The detection of a frequency component / sub-part of the audio signal 211 is for example obtained using the time window as detection parameter 311.

For example, in each time segment of the envelope of the audio signal having a duration equal to the time window 311, a first characteristic of the audio information 212 is obtained corresponding to the maximum of the amplitude of the envelope for said each time segment.

A frequency-domain representation of each time segment of the envelope is obtained, for example via FFT, and a second characteristic of the audio information 212 is obtained corresponding for example to the highest frequency (maximum frequency within the time segment). According to another example, a band-pass filtering is performed on the frequency-domain representation of the time segment and the second characteristic of the audio information 212 that is extracted corresponds to the highest frequency (maximum frequency) within the band-pass filtered signal.

### Haptic information determination

When a transient is detected, haptic information associated / correlated with this transient is generated based on the characteristic(s) 212 received by unit 23.

For example, the haptic information comprises an amplitude value (of the haptic effect to be rendered) that is determined from the amplitude value obtained from unit 31.

The amplitude value of the haptic information is for example determined by applying a weighting factor or coefficient to the received audio amplitude value 212, the value of the weighting factor being for example according to the user-preference parameters.

The haptic effect representative of the transient is for example synchronized with the audio content by using the characteristic 212 representative of time.

The haptic effect associated with the transient corresponds for example to a peak having as amplitude the amplitude obtained as a function of the amplitude corresponding to the characteristic obtained from the detected transient. The duration of the haptic effect is for example set from a time parameter comprised in the user-preference parameters.

When a frequency component is detected, haptic information (and associated haptic effect) associated / correlated with this frequency component is generated based on the characteristic(s) 212 received by unit 23.

For example, the haptic information may be represented with a sine function, with frequency corresponding to the frequency characteristic 212 obtained from unit 31 and the amplitude of the signal corresponds to the amplitude characteristic 212 obtained from unit 31, a weighting factor or coefficient (for example depending on the user-preference parameters 231) being for example applied to the amplitude characteristic 212 to obtain the amplitude of the haptic information.

Different functions may be used to obtain the haptic information (for transient and/or frequency component), the function used to generate the haptic information being for example according to the type of the haptic device 13 and/or to the haptic rendering capabilities of the actuator(s) comprised in the haptic device 13.

For example, if the haptic device 13 comprises one or more voice coils, a first function may be used to generate the haptic information for a haptic effect corresponding to a transient from characteristic(s) 212 and a second function may be used to generate the haptic information for a haptic effect corresponding to a frequency component from characteristic(s) 212. If the haptic device 13 comprises one or more LRA(s), a third function may be used to generate the haptic effect corresponding to a transient from characteristic(s) 212 and a fourth function may be used to generate the haptic information for a haptic effect corresponding to a frequency component from characteristic(s) 212. According to this example, the first, second, third and fourth functions are different.

According to a second exemplary embodiment, the haptic information is obtained by applying low pass filtering to the audio signal 211.

### Detection of frequency component(s) / sub-part(s)

A first low pass filter is applied to the audio signal 211 with a first frequency cut (for example equal to 400 or 450 Hz) that corresponds to a detection parameter 311.

The first low passed signal obtained from the first low pass filtering is for example used by unit 23 as driving signal for obtaining or generating the haptic information for the haptic effect. Characteristics or audio information 212 transmitted by unit 31 to unit 23 correspond for example to parameters representative of a set of samples representative of the first low passed signal.

### Detection of transient(s)

A second low pass filter is applied to the audio signal 211 with a second frequency cut that is higher than the first frequency cut (for example equal to 450, 550 or 600 Hz), the second frequency cut also corresponding to a detection parameter 311.

Power spectrum, noted PSD (Power Spectral Density), is determined for the first low passed signal (PSD1) and for the second low passed signal (PSD2) obtained from the second low pass filtering, as known to those skilled in the art.

A transient is for example detected when the difference between PSD2 and PSD1 is greater or above than a determined threshold value, noted 'T' (that is received as detection parameter 311), i.e., when PSD2 - PSD1 > T.

The characteristic 212 obtained from the detected transient corresponds for example to the amplitude power difference associated with the detection of 'PSD2 - PSD1 > T'.

The above operations may for example be reiterated for each time segment of the audio signal 211, the duration of which being indicated or signaled by a detection parameter.

According to a variant, RMS (Root Mean Square) is used instead of PSD.

### Haptic information determination

When a frequency component is detected, the data representative of the first low passed signal is used by unit 23 as driving signal for synthesizing the corresponding haptic effect.

When a transient is detected, a corresponding haptic effect is generated or synthesized using the amplitude power difference to determine the amplitude of the haptic effect, for example by applying a weighting factor or coefficient to the received amplitude power difference, the value of the weighting factor being for example according to the user-preference parameters.

As for the first exemplary embodiment, different functions may be used to generate the haptic information representative of the effect(s) (for transient and/or frequency component), the function used to generate the signal representative of the haptic effect being for example according to the type of the haptic device 13 and/or to the haptic rendering capabilities of the actuator(s) comprised in the haptic device 13.

**Figure 4** illustrates a schematic partially perspective view of an exemplary embodiment of a haptic device 4.

The haptic device 4 according to the example of figure 4 corresponds to a chair 4, e.g., a gaming seat, a theater seat, an operator seat, a vehicle seat, etc. The haptic device 4 corresponds for example to the haptic device 13 of figure 1.

The chair 4 advantageously incorporates a set of haptic actuators 41 to 48 configured to render one or more haptic effects onto one or more parts of a user's body in contact, directly or indirectly, with the haptic actuators 41 to 48. The haptic actuators 41 to 48 may be embedded in the foam forming part of the structure of the chair 4, a membrane being for example arranged between an actuated part of the haptic actuators and the user's body part to improve comfort for example.

The haptic actuators 41 to 48 are arranged in different parts or elements of the chair 4 each supporting or resting one or more user's body parts: haptic actuators 41, 42 are arranged in the headrest, haptic actuators 43, 44, 45 and 46 are arranged in the backrest and haptic actuators 47, 48 are arranged in the seat.

According to other examples, haptic actuators may further be arranged in the armrest and/or the leg rest, even if not illustrated.

The number of haptic actuators in the chair 4 is equal to 8 according to the non-limiting example of figure 4. The haptic actuators 41 to 48 may all be of the same type. According to another example, the types of the haptic actuators 41 to 48 may vary, for example according to the part of the chair they are embedded into.

The number of haptic channels may for example be equal to the number of haptic actuators, i.e., 8 haptic channels.

According to another example, haptic actuators are grouped according to their location, e.g., according to the part of the chair they belong to. According to this another example, the number of haptic channels is equal to 4, i.e., 1 haptic channel for the headrest (haptic actuators 41, 42), 1 haptic channel for the backrest (haptic actuators 43 to 46) and 1 haptic channel for the seat (haptic actuators 47, 48).

According to an example, the number of audio channels is equal to 8 (for example for an audio content corresponding to a 7.1 surround audio content) and there is a one-to-one matching between the audio channels and the haptic channels, taking into account the spatialization information of the audio channels and the location information of the haptic actuators 41 to 48.

The matching is for example as follows:
- haptic information of the haptic channel for the haptic actuator 41 is determined from audio information of the audio channel corresponding to "Front Right" in the 7.1 surround audio content; the frequency, amplitude and phase of the haptic information may for example be the same as the frequency, amplitude and phase of the audio information;
- haptic information of the haptic channel for the haptic actuator 42 is determined from audio information of the audio channel corresponding to "Front Left" in the 7.1 surround audio content; the frequency, amplitude and phase of the haptic information may for example be the same as the frequency, amplitude and phase of the audio information;
- haptic information of the haptic channel for the haptic actuator 43 is determined from audio information of the audio channel corresponding to "Rear Right" in the 7.1 surround audio content; the frequency, amplitude and phase of the haptic information may for example be the same as the frequency, amplitude and phase of the audio information;
- haptic information of the haptic channel for the haptic actuator 44 is determined from audio information of the audio channel corresponding to "Rear Left" in the 7.1 surround audio content; the frequency, amplitude and phase of the haptic information may for example be the same as the frequency, amplitude and phase of the audio information;
- haptic information of the haptic channel for the haptic actuator 45 is determined from audio information of the audio channel corresponding to "Side Right" in the 7.1 surround audio content; the frequency, amplitude and phase of the haptic information may for example be the same as the frequency, amplitude and phase of the audio information;
- haptic information of the haptic channel for the haptic actuator 46 is determined from audio information of the audio channel corresponding to "Side Left" in the 7.1 surround audio content; the frequency, amplitude and phase of the haptic information may for example be the same as the frequency, amplitude and phase of the audio information;
- haptic information of the haptic channel for the haptic actuator 47 is determined from audio information of the audio channel corresponding to "Centre" in the 7.1 surround audio content; the frequency, amplitude and phase of the haptic information may for example be the same as the frequency, amplitude and phase of the audio information;
- haptic information of the haptic channel for the haptic actuator 48 is determined from audio information of the audio channel corresponding to "Subwoofer" in the 7.1 surround audio content; the frequency, amplitude and phase of the haptic information may for example be the same as the frequency, amplitude and phase of the audio information;

According to a variant, haptic information of the haptic channel for the haptic actuators 47 and 48 (one haptic channel for both haptic actuators 47, 48) is determined from audio information of the same audio channel corresponding to "Centre" in the 7.1 surround audio content. According to a further variant, haptic information of the haptic channel for the haptic actuator 47, 48 is determined from audio information of the same audio channels corresponding to "Centre" and "Subwoofer" in the 7.1 surround audio content, for example frequency information for the haptic channel corresponds to frequency information of audio channel "Subwoofer" and amplitude information of the haptic channel is the average of the amplitude information of "Centre" and "Subwoofer" audio channels. According to another example, haptic information of the haptic channel for the haptic actuators 43 and 45 (one haptic channel for both haptic actuators 43, 45) is determined from audio information of the same audio channel corresponding to "Rear Right" in the 7.1 surround audio content; and haptic information of the haptic channel for the haptic actuators 34 and 36 (one haptic channel for both haptic actuators 44, 46) is determined from audio information of the same audio channel corresponding to "Rear Left" in the 7.1 surround audio content.

According to another example, the frequency information for the haptic channel associated with haptic actuator 47 corresponds to the frequency information of "Subwoofer" audio channel and amplitude information for the haptic channel associated with haptic actuator 47 corresponds to the amplitude information of "Side Right" audio channel ("Subwoofer" frequencies modulated by "Side Right" amplitudes). The frequency information for the haptic channel associated with haptic actuator 48 corresponds to the frequency information of "Subwoofer" audio channel and amplitude information for the haptic channel associated with haptic actuator 48 corresponds to the amplitude information of "Side Left" audio channel ("Subwoofer" frequencies modulated by "Side Left" amplitudes).

According to another example, the frequency information for the haptic channel associated with haptic actuator 47 corresponds to the frequency information of "Subwoofer" audio channel and amplitude information for the haptic channel associated with haptic actuator 47 corresponds to the amplitude information of the average of "Side Right" and "Subwoofer" audio channels ("Subwoofer" frequencies modulated by ("Side Right" amplitude + "Subwoofer" amplitude) / 2). The frequency information for the haptic channel associated with haptic actuator 38 amplitude information for the haptic channel associated with haptic actuator 38 corresponds to the amplitude information of the average of "Side Left" and "Subwoofer" audio channels ("Subwoofer" frequencies modulated by ("Side Left" amplitude + "Subwoofer" amplitude) / 2).

According to a further example, the number of haptic channels, the matching between audio channels and haptic channels and/or the identifying of the one or more haptic actuators to be associated with each haptic channel are determined according to the sound spatialization information 213, for example as described hereinafter with regard to figure 7.

**Figure 5** illustrates a schematic partially perspective view of an exemplary embodiment of a haptic device 5.

The haptic device 5 according to the example of figure 5 corresponds to a headset 5. The haptic device 5 corresponds for example to the haptic device 13 of figure 1.

The headset 5 advantageously incorporates a set of haptic actuators 51 and 52, the haptic actuator 51 being arranged in the right earpiece of the headset 5 and the haptic actuator 52 being arranged in the left earpiece of the headset 5.

The number of haptic actuators is equal to 2 according to the example of figure 5. Naturally, the number of haptic actuators is not limited to 2 but extends to 4, 6, 8 or 10 equally distributed in each earpiece for example.

According to an example, the number of audio channels is equal to 6 (5.1 surround audio content). The matching between the 6 audio channels and the 2 haptic channels is for example as follows:
- frequency information for the "Right" haptic channel corresponds for example to the frequency information of the "Side Right" audio channel (or to a part of the frequency of the "Side Right" audio channel, for example the frequencies lower than a determined cutoff frequency (or frequency cut)) and the amplitude information for the "Right" haptic channel corresponds for example to average of the amplitude information of "Front Light" and "Side Right" audio channels; and
- frequency information for the "Left" haptic channel corresponds for example to the frequency information of the "Side Left" audio channel (or to a part of the frequency of the "Side Left" audio channel, for example the frequencies lower than a determined cutoff frequency (or frequency cut)) and the amplitude information for the "Left" haptic channel corresponds for example to the average of the amplitude information of "Front Left" and "Side Left" audio channels.

According to another example, the matching between the audio channels and the haptic channels is determined according to the sound spatialization information 213, for example as described hereinafter with regard to figure 7. **Figure 6** illustrates a schematic representation of the arrangement of a set of actuators in a multidimensional space, in accordance with at least one exemplary embodiment.

According to the example of figure 6, the spatial distribution of the haptic actuators 601, 602, 603, 611, 612, 613, 621, 622, 623, 631, 632 and 633 is signaled or encoded into the haptic device information 231 with respect to a cartesian 3D space (X, Y, Z), that may for example be associated with the haptic device 6 that may correspond to the haptic device 13 or to a part of the haptic device 13.

According to a variant, the spatial distribution of the haptic actuators is made with respect to a part of a body model that is associated with the haptic device 6. The part of the body model that is associated with a haptic device corresponds to the part of the body model in contact with the haptic device 6 or wearing the haptic device 6, depending on the type of the haptic device 6.

The spatial distribution is for example signaled under the form of a vector (represented with [Nₓ,N_{y},N_{z}]) with:
- a first information (first element 'Nₓ' of the vector) representing a number of haptic actuators according to the first dimension (according to the X-axis, which represents for example the longitudinal axis) of the 3D space; Nₓ may be seen as the resolution of the haptic actuators according to the first dimension, i.e., the number of haptic actuators per haptic device according to the first dimension;
- a second information (second element 'N_{y}' of the vector) representing a number of haptic actuators according to the second dimension (according to the Y-axis, which represents for example the transversal axis) of the 3D space; N_{y} may be seen as the resolution of the haptic actuators according to the second dimension, i.e., the number of haptic actuators per haptic device according to the second dimension; and
- a third information (third element 'N_{z}' of the vector) representing a number of haptic actuators according to the third dimension (according to the Z-axis, which represents for example the depth axis) of the 3D space; N_{z} may be seen as the resolution of the haptic actuators according to the third dimension, i.e., the number of haptic actuators per haptic device according to the third.

An information representative of the maximal resolution of the haptic device (i.e., the total amount of haptic actuators per haptic device) may be obtained from the second data with: Nₓ*N_{y}*N_{z}.

The spatial distribution of the haptic actuators of the haptic device may be signaled or encoded as follows: [3,4,1] with 3 haptic actuators according to the X axis, 4 haptic actuators according to the Y axis and 1 haptic actuator according to the Z axis for a total amount of 12 haptic actuators (3*4*1).

According to another example, the spatial distribution of the haptic actuators 601, 602, 603, 611, 612, 613, 621, 622, 623, 631, 632 and 633 is signaled or encoded in the haptic device information 231 with respect to a 2D space (θ, Y), that may for example be associated with the haptic device 6 or with the body part (or with the body model the body part belongs to) associated with the haptic device 6. The 2D space may for example be assimilated to a polar 2D space.

The spatial distribution is for example signaled under the form of a vector (represented with [N_{θ},N_{Y}]) with:
- a first information (first element `Ne' of the vector) representing the number of angular sectors according to which the body part / backrest is segmented or divided according to a first dimension of the 2D space; and
- a second information (second element 'N_{y}' of the vector) representing a number of haptic actuators according to the second dimension (according to the longitudinal axis of the angular sectors for example) of the 2D space.

The number of haptic channels may for example be determined from the spatial distribution information, for example as corresponding to Nₓ*N_{y}*N_{z} (or N_{θ} * N_{Y}).

**Figure 7** shows a schematic representation of a set of audio rendering devices 701, 702, 703, 704, for example loudspeakers, arranged around a haptic device 7 in a three-dimensional space, in accordance with at least one exemplary embodiment.

The haptic device 7 corresponds to the haptic device 13 of figure 1, to the haptic device 4 of figure 4 or the haptic device 5 of figure 5.

According to a variant, the element 7 represents the body of a user (or a part of the body), which is associated with the haptic device.

The spatial distribution or spatial arrangement of the audio rendering devices 701, 702, 703, 704 is for example according to a configuration as defined for 5.1 surround audio environment, 7.1 surround audio environment, 11.1 surround audio environment or any environment with 2 or more audio channels (and 2 or more audio rendering devices).

Even if 4 audio rendering devices are illustrated on Figure 7, the present disclosure is not limited to this specific example but extends to any stereo or surround audio environment with 2 or more audio rendering devices.

Each audio rendering device 701 to 704 is for example arranged at a specific location that is for example defined with a radial position with respect to a reference direction 700 and a point in the rendering space. The reference direction 700 may for example corresponds to a direction according to which a user is looking at a display screen, for example when the audio content is associated with a video content to be displayed on the display screen (in front of the user).

A virtual audio source 70 is illustrated on Figure 7, such a virtual audio source being located at a determined radial position defined with an angular value between the reference direction 700 and a main direction 701 associated with the virtual audio source 70.

The location information representative of the position of the virtual audio source 70 may be determined according to any method known to the skilled person in the art. The location information is for example obtained by determining or computing time delays (also called time differences or lags) between the audio signals of the haptic channels, by extracting cues or features of the audio content from the audio signals, for example based on cross-correlation techniques and/or as described in the paper "Calculated Time Delays of Multiple Active Sources in Live Sound", from Josh Reiss, in Conference Audio Engineering Society Convention 129, November 2010 or in the paper "Localization of Virtual Sources in Multichannel Audio Reproduction", by Ville Pulkki and Toni Hirvonen, in IEEE Transactions on Speech and Audio Processing, vol. 13, No. 1, January 2005.

Naturally, the number of virtual audio source is not limited to 1 but extends to any number, depending on the audio content. The number and the position of the one or more virtual audio sources are determined in a temporal way. The number and the position of the one or more virtual audio sources may vary time, depending on the audio content.

The one or more virtual audio sources 70 and associated location may be used for:
- determining and identifying the haptic channels of the multichannel haptic signal, one haptic channel being for example associated with one different virtual audio source 70, meaning that the number of haptic channels equals the number of virtual audio sources 70; and/or
- determining and identifying the one or more audio channels to be used as a basis for determining the haptic information for each virtual audio source 70: the one or more audio channels to be associated with a haptic channel may correspond to the audio channel(s) associated with the audio rendering device(s) that is(are) the closest to the virtual audio source 70, e.g., the audio channels associated with the audio rendering devices 701 and 702 according to the example of Figure 7; and/or
- determining or identifying the one or more haptic actuators to be associated with the haptic channel associated with each virtual audio source 70. To reach that aim, the virtual audio source 70 may for example be projected onto the 3D representation 7 of the haptic device / body of the user, the result of the projection corresponding for example to a point 71. Coordinates of the points may for example be used to identify one or more haptic actuators, the one or more haptic actuators corresponding for example to the haptic devices comprised in an area comprised in a circle or a sphere of a determined radius centred on the point. The radius may for example correspond to a parameter of the rendering rules used to determine the haptic information from the audio information. The haptic actuators are for example identified by the second device 12, from the haptic device information 231 71 (for example using the spatial distribution of the haptic actuators described with reference to Figure 6). According to a variant, the coordinates of the point 71 and the radius are included in the haptic information to be transmitted to the haptic device, the haptic device determining the one or more haptic actuators from this information. The radius may for example transmitted in a format corresponding to the format described with reference to Figure 6.

According to a first example, considering the haptic device 4 of Figure 4, the element 7 corresponding to a body model of a user seating in the chair 4, haptic actuators 43 and 45 are identified as being the haptic actuators of the chair 4, which corresponds to the haptic actuators belonging to an area corresponding to the projection point 71 of the virtual audio source 70 onto the element 7.

A first haptic channel may be determined and associated with the haptic actuators 43 and 45, located on the right-hand side of the chair 4 are associated with this first haptic channel.

One or more other haptic channels may be determined according to the location of the other haptic actuators of the chairs 4. For example, a second haptic channel may be generated and associated with the haptic actuators 44 and 46, a third haptic channel may be generated and associated with the haptic actuators 41 and 42 and a fourth haptic channel may be generated and associated with the haptic actuators 47 and 48.

The haptic information to be associated with each of the 4 haptic channels is for example determined based on the audio information obtained from the audio channels associated with the virtual audio source 70.

The audio information obtained from the audio channels is for example adjusted for each haptic channel, in a way that the user seating in the chair feels the haptic effect generated by the haptic actuators with a greater amplitude on the area associated with the projection point 71.

Weighing coefficients are for example applied to the audio information (e.g., the amplitude of the audio signals) in a way that the amplitude of the haptic effect generated by the haptic actuators 43 and 45 is greater than the amplitude of the haptic effect generated by the haptic actuators 44 and 46, by the haptic actuators 41 and 42 and by the haptic actuators 47 and 48.

The weighing coefficients are for example determined using sound spreading properties, e.g., sound spreading properties given the acoustical shadow introduced by the user's body, as described for example in the document "Virtual Audio Systems" by B. Kapralos, M.R. Jenkin and E. Milio, disclosed in "Presence Teleoperators & Virtual Environment" 17(6):527-549 in December 2008.

For example, the weighing factors are determined or computed in such a way that the amplitude of the haptic effect is maximal for haptic actuators 43 and 43, the amplitude of the haptic effect is attenuated for haptic actuators 44 and 46 with regard to the maximum amplitude, the haptic actuators 44 and 46 being in contact with the same body part of the user (i.e., the back) as the haptic actuators 43 and 45, the amplitude of the haptic effect is minimal for haptic actuators 41 and 42 in contact with the head of the user and the amplitude of the haptic effect is null for haptic actuators 47 and 48 in contact with the bottom of the user.

The rendering of the haptic effect by the haptic device 4 is thus adapted or adjusted to the audio content and to the characteristics of the audio content (location of the virtual audio source, properties of the audio content (e.g., amplitude, frequency, presence of a specific component such as a transient, etc.).

According to a second example, considering the haptic device 5 of Figure 5, the element 7 corresponding to the head of a user wearing the headset 5, the right haptic actuator 52 is identified as being the haptic actuator of the headset 5, which corresponds to the haptic actuator belonging to an area corresponding to the projection point 71 of the virtual audio source 70 or closest to this projection point 71.

According to this second example, the haptic information provided to the right haptic actuator 52 (via the right haptic channel) is determined in a way that the user feels the haptic effect with a greater amplitude on the right than on the left of his head, for example based on the acoustical shadow introduced by the head.

**Figure 8** shows a schematic block diagram of steps of a method of generating a multichannel haptic signal comprising a plurality of haptic signals, each associated with a haptic channel and one or more haptic actuators of a haptic device, from a multichannel audio content, in accordance with at least one exemplary embodiment.

In a first step 81, audio data representative of a multichannel audio signal representative of the multichannel audio content is received.

In a second step 82, audio information is determined, from the multichannel audio signal received in step 81, for each audio channel of a plurality of audio channels comprised in the multichannel audio signal and sound spatialization information, the audio information being representative of characteristics of a part of the multichannel audio signal associated with each audio channel.

In a third step 83, for each haptic channel of the plurality of haptic channels, haptic information is determined according to the audio information of at least one audio channel determined at step 82 and according to the sound spatialization information, the haptic information being representative of characteristics of a part of the multichannel haptic signal associated with each haptic channel.

In a fourth step 84, the multichannel haptic signal is generated according to the haptic information.

**Figure 9** shows a schematic block diagram illustrating an example of a system 9 in which various aspects and exemplary embodiments are implemented.

System 9 may be embedded as one or more devices including the various components described below. In various embodiments, the system 9 may be configured to implement one or more of the aspects described in the present application.

Examples of equipment that may form all or part of the system 9 include personal computers, laptops, smartphones, tablet computers, digital multimedia set top boxes and their associated processing systems, head mounted display devices (HMD, see-through glasses), haptic sensors or actuators, "caves" (system including multiple displays), servers, haptic encoders, haptic decoders, post-processors processing output from a haptic decoder, pre-processors providing input to a haptic encoder, web servers, set-top boxes, wireless (e.g., Bluetooth^{®}) connected wearable haptic devices, game controller, mouse, mousepad, keyboard, palm rest, chairs, desk, XR headset, headphones, bracelet, head and/or lumbar support device or chair, any other device for processing haptic data or haptic signals, or other communication devices. Elements of system 9, singly or in combination, may be embodied in a single integrated circuit (IC), multiple ICs, and/or discrete components. For example, in at least one embodiment, the processing and encoder/decoder elements of system 9 may be distributed across multiple ICs and/or discrete components. In various embodiments, the system 9 may be communicatively coupled to other similar systems, or to other electronic devices, via, for example, a communications bus or through dedicated input and/or output ports.

The system 9 may include at least one processor 91 configured to execute instructions loaded therein for implementing, for example, the various aspects described in the present application. Processor 91 may include embedded memory, input output interface, and various other circuitries as known in the art. The system 9 may include at least one memory 92 (for example a volatile memory device and/or a non-volatile memory device). System 9 may include a storage device 94, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 94 may include an internal storage device, an attached storage device, and/or a network accessible storage device, as non-limiting examples.

The system 9 may include an encoder/decoder module 93 configured, for example, to process data to provide encoded/decoded haptic signal or data, and the encoder/decoder module 93 may include its own processor and memory. The encoder/decoder module 93 may represent module(s) that may be included in a device to perform the encoding and/or decoding functions. As is known, a device may include one or both of the encoding and decoding modules. Additionally, encoder/decoder module 93 may be implemented as a separate element of system 93 or may be incorporated within processor 91 as a combination of hardware and software as known to those skilled in the art.

Program code to be loaded onto processor 91 or encoder/decoder 93 to perform the various aspects described in the present application may be stored in storage device 94 and subsequently loaded onto memory 92 for execution by processor 91. In accordance with various embodiments, one or more of processor 91, memory 92, storage device 94, and encoder/decoder module 93 may store one or more of various items during the performance of the processes described in the present application. Such stored items may include, but are not limited to, data representative of audio content, data representative of video content, haptic-related data, a bitstream, matrices, variables, and intermediate or final results from the processing of equations, formulas, operations, and operational logic.

In several embodiments, memory inside of the processor 91 and/or the encoder/decoder module 93 may be used to store instructions and to provide working memory for processing that may be performed during data processing, encoding or decoding.

In other embodiments, however, a memory external to the processing device (for example, the processing device may be the processor) may be used for one or more of these functions. The external memory may be the memory 92 and/or the storage device 94, for example, a dynamic volatile memory and/or a non-volatile flash memory. In at least one embodiment, a fast external dynamic volatile memory such as a RAM may be used as working memory for data processing.

The input to the elements of system 9 may be provided through various input devices as indicated in block 95. Such input devices include, but are not limited to, (i) an RF portion that may receive an RF signal transmitted, for example, over the air by a broadcaster, (ii) a Composite input terminal, (iii) a USB input terminal, (iv) a phone connector (also known as phone jack, audio jack, headphone jack or jack plug) input terminal and/or (v) an HDMI input terminal.

In various embodiments, the input devices of block 95 may have associated respective input processing elements as known in the art. For example, the RF portion may be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain embodiments, (iv) demodulating the down-converted and band-limited signal, (v) performing error correction, and (vi) demultiplexing to select the desired stream of data packets. The RF portion of various embodiments may include one or more elements to perform these functions, for example, frequency selectors, signal selectors, band-limiters, channel selectors, filters, downconverters, demodulators, error correctors, and de-multiplexers. The RF portion may include a tuner that performs various of these functions, including, for example, down-converting the received signal to a lower frequency (for example, an intermediate frequency or a near-baseband frequency) or to baseband.

In one set-top box embodiment, the RF portion and its associated input processing element may receive an RF signal transmitted over a wired (for example, cable) medium. Then, the RF portion may perform frequency selection by filtering, down-converting, and filtering again to a desired frequency band.

Various embodiments rearrange the order of the above-described (and other) elements, remove some of these elements, and/or add other elements performing similar or different functions.

Adding elements may include inserting elements in between existing elements, such as, for example, inserting amplifiers and an analog-to-digital converter. In various embodiments, the RF portion may include an antenna.

Additionally, the USB and/or HDMI terminals may include respective interface processors for connecting system 9 to other electronic devices across USB and/or HDMI connections. It is to be understood that various aspects of input processing, for example, analog to digital conversion, time domain to frequency domain conversion, down sampling, band pass or low pass filtering, Reed-Solomon error correction, may be implemented, for example, within a separate input processing IC or within processor 91 as necessary. Similarly, aspects of USB or HDMI interface processing may be implemented within separate interface ICs or within processor 91 as necessary. The processed stream may be provided to various processing elements, including, for example, processor 91, and encoder/decoder 93 operating in combination with the memory and storage elements to process the data stream as necessary for presentation on an output device.

Various elements of system 9 may be provided within an integrated housing. Within the integrated housing, the various elements may be interconnected and transmit data therebetween using suitable connection arrangement 95, for example, an internal bus as known in the art, including the I2C bus, wiring, and printed circuit boards.

The system 9 may include communication interface 96 that enables communication with other devices via communication channel 960. The communication interface 96 may include, but is not limited to, a transceiver configured to transmit and to receive data over communication channel 960. The communication interface 96 may include, but is not limited to, a modem or network card and the communication channel 960 may be implemented, for example, within a wired and/or a wireless medium.

Data may be streamed to the system 9, in various embodiments, using a Wi-Fi network such as IEEE 802.11. The Wi-Fi signal of these embodiments may be received over the communications channel 960 and the communications interface 96 which are adapted for Wi-Fi communications. The communications channel 960 of these embodiments may be typically connected to an access point or router that provides access to outside networks including the Internet for allowing streaming applications and other over-the-top communications.

Other embodiments may provide streamed data to the system 9 using a set-top box or a computer that delivers the data over the HDMI connection of the input block 95.

Still other embodiments may provide streamed data to the system 9 using the RF connection of the input block 95.

The streamed data may be used as a way for signaling information used by the system 9. The signaling information may comprise the data encoded in a container such as a binary stream or a haptic effect file for example.

It is to be appreciated that signaling may be accomplished in a variety of ways. For example, one or more syntax elements, flags, and so forth may be used to signal information to a corresponding data processing device in various embodiments.

The system 9 may provide an output signal to various output devices, including a display 970, speakers 980, and other peripheral devices 990 like haptic devices/actuators.

In various embodiments, control signals may be communicated between the system 9 and the display 970, speakers 980, or other peripheral devices 990 using signaling such as AV.Link (Audio/Video Link), CEC (Consumer Electronics Control), Audio protocols, USB (Universal Serial Bus), HIF UHP (Haptics Industry Forum - Universal Haptic Protocol) or other communications protocols that enable device-to-device control with or without user intervention.

The output devices may be communicatively coupled to system 9 via dedicated connections through respective interfaces 97, 98, and 99.

Alternatively, the output devices may be connected to system 9 using the communications channel 960 via the communications interface 96. The display 970, speakers 980 and/or haptic device(s) (actuators) 990 may be integrated in a single unit with the other components of system 9 in an electronic.

In various embodiments, the display interface 97 may include a display driver, such as, for example, a timing controller (T Con) chip.

The display 970, speakers 980 and/or haptic device(s) (actuators) 990 may alternatively be separate from one or more of the other components. In various embodiments in which the display 970, speakers 980 and/or haptic device(s) (actuators) 990 may be external components, the output signal may be provided via dedicated output connections, including, for example, HDMI ports, USB ports, or COMP outputs.

In **Figures 1 to 9****,** various methods are described herein, and each of the methods includes one or more steps or actions for achieving the described method. Unless a specific order of steps or actions is required for proper operation of the method, the order and/or use of specific steps and/or actions may be modified or combined.

Some examples are described with regard to block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device. Processors also include communication devices.

Additionally, the methods may be implemented by instructions being performed by a processor, and such instructions (and/or data values produced by an implementation) may be stored on a computer readable storage medium. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

An apparatus may be implemented in, for example, appropriate hardware, software, and firmware. Examples of such apparatus include personal computers, laptops, smartphones, tablet computers, digital multimedia set top boxes, digital television receivers, personal video recording systems, connected home appliances, head mounted display devices (HMD, see-through glasses), projectors (beamers), "caves" (system including multiple displays), servers, video and/or haptic encoders, video and/or haptic decoders, haptic engine, post-processors processing output from a video decoder, pre-processors providing input to a video encoder, web servers, set-top boxes, wireless connected wearable haptic devices, e.g., Bluetooth^{®} connected wearable haptic devices, game controller, mouse, mousepad, keyboard, palm rest, chairs, desk, XR headset, headphones, bracelet, head and/or lumbar support device or chair, and any other device for processing haptic data or signals representative of one or more haptic feedback or effect, or other communication devices. As should be clear, the equipment may be mobile.

Computer software may be implemented by the processor 91 or by hardware, or by a combination of hardware and software. As a non-limiting example, the embodiments may be also implemented by one or more integrated circuits. The memory 92 may be of any type appropriate to the technical environment and may be implemented using any appropriate data storage technology, such as optical memory devices, magnetic memory devices, semiconductor-based memory devices, fixed memory, and removable memory, as non-limiting examples. The processor 91 may be of any type appropriate to the technical environment, and may encompass one or more of microprocessors, general purpose computers, special purpose computers, and processors based on a multi-core architecture, as non-limiting examples.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, steps, operations, elements, and/or components but do not preclude the presence or addition of one or more other features, integers, steps, operations, elements, components, and/or groups thereof. Moreover, when an element is referred to as being "responsive" or "connected" to another element, it may be directly responsive or connected to the other element, or intervening elements may be present. In contrast, when an element is referred to as being "directly responsive" or "directly connected" to other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present application. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of this application. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the embodiment/implementation) is included in at least one embodiment/implementation. Thus, the appearances of the phrase "in one exemplary embodiment" or "in an exemplary embodiment" or "in one implementation" or "in an implementation", as well any other variations, appearing in various places throughout this application are not necessarily all referring to the same embodiment.

Similarly, reference herein to "in accordance with an exemplary embodiment / example / implementation" or "in an exemplary embodiment / example / implementation", as well as other variations thereof, is frequently used to convey that a particular feature, structure, or characteristic (described in connection with the exemplary embodiment / example / implementation) may be included in at least one exemplary embodiment / example / implementation. Thus, the appearances of the expression "in accordance with an exemplary embodiment / example / implementation" or "in an exemplary embodiment / example / implementation" in various places in the specification are not necessarily all referring to the same exemplary embodiment / example / implementation, nor are separate or alternative exemplary embodiment / examples / implementation necessarily mutually exclusive of other exemplary embodiments / examples / implementation.

Reference numerals appearing in the claims are by way of illustration only and shall have no limiting effect on the scope of the claims. Although not explicitly described, the present embodiments / examples and variants may be employed in any combination or sub-combination.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows. Additionally, this application may refer to "obtaining" various pieces of information. Obtaining the information may include one or more of, for example, receiving the information, determining the information, estimating the information, calculating the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, or estimating the information.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method of generating a multichannel haptic signal (233) comprising a plurality of haptic signals each associated with a haptic channel, each haptic channel being associated with a set of haptic actuators of a haptic device (13), the method comprising the steps of:
- receiving (81) audio data representative of a multichannel audio signal (201);
- determining (82), from said multichannel audio signal (201), audio information (212) for each audio channel of a plurality of audio channels comprised in said multichannel audio signal (201) and sound spatialization information (213), said audio information (212) being representative of characteristics of an audio signal (201) comprised in said multichannel audio signal (201) and associated with said each audio channel;
- determining (83), for each haptic channel, haptic information according to the audio information (212) of at least one audio channel and according to said sound spatialization information (213), said haptic information being representative of characteristics of the haptic signal associated with said each haptic channel; and
- generating (84) said multichannel haptic signal (233) according to said haptic information.

2. The method according to claim 1, wherein the determining of said sound spatialization information (213) comprises:
- determining time delay information representative of time delays between said audio signals associated with said audio channels;
- determining location information representative of a position of each virtual audio source (70) of a set of virtual audio sources in a space associated with said haptic device (13) according to said time delay information, said sound spatialization information (213) comprising said location information, each haptic channel of the plurality of haptic channels being associated with a different virtual audio source of said set of virtual audio sources.

3. The method according to claim 2, wherein said at least one audio channel is selected among said plurality of audio channels according to the location information of the virtual audio source (70) associated with said each haptic channel.

4. The method according to claim 2 or 3, wherein said set of haptic actuators associated with said each haptic channel is determined according to the location information of the virtual audio source (70) associated with said each haptic channel.

5. The method according to claim 1, wherein the determining (83) of the haptic information (213) is further according to haptic device information (231) representative of said haptic device (13), said haptic device information (231) belonging to a set of information comprising:
- identification information identifying said haptic device;
- a number of haptic actuators comprised in said set of haptic actuators;
- a number of haptic channels of the plurality of haptic channels;
- location information representative of a location of said haptic actuators in said haptic device; and
- haptic rendering capabilities of said haptic device.

6. The method according to claim 5, wherein said number of haptic channels is determined according to said number of haptic actuators.

7. The method according to claim 5 or 6, wherein said haptic information is further determined according to said location information.

8. The method according to one of claims 5 to 7, wherein said location information corresponds to spatial distribution information representative of spatial distribution of said set of haptic actuators in a determined multidimensional space associated with at least a part of said haptic device (13).

9. The method according to one of claims 5 to 8, wherein a number of audio channels being equal to the number of haptic channels, the haptic information of each haptic channel of said plurality of haptic channels is determined according to the audio information (212) of a different audio channel of said plurality of audio channels.

10. The method according to one of claims 1 to 9, wherein the haptic information of one haptic channel of said plurality of haptic channels is determined according to the audio information (212) of at least two audio channels of said plurality of audio channels.

11. The method according to one of claims 1 to 10, wherein said audio information belongs to a set of information comprising:
- frequency information representative of frequency;
- amplitude information representative of amplitude;
- phase information representative of phase;
- envelope information representative of an envelope of said audio signal; and
- spectral power information representative of spectral power of said audio signal.

12. The method according to one of claims 1 to 11, further comprising:
- obtaining classification information representative of a type of an audio content associated with said multichannel audio signal;
- selecting a set of detection parameters among a plurality of sets of detection parameters according to said classification information;
- detecting at least a component of said audio signal associated with said each audio channel according to said selected set of detection parameters, said audio information being determined from said at least a component.

13. The method according to claim 12, wherein said at least a component belongs to a set of components comprising:
- a component corresponding to a transient in a temporal representation of said part of said multichannel audio signal (201); and
- a component corresponding to a frequency sub-band of a frequency band associated with a frequency representation of said part of said multichannel audio signal (201).

14. An apparatus (9) of generating a multichannel haptic signal, wherein said apparatus comprising a memory (92) associated with at least a processor (91) configured to implement the method according to any one of claims 1 to 13.

15. A computer program product comprising instructions of program code for executing the method according to any one of claims 1 to 13, when said program is executed on a computer.
